Europäisches Patentamt

European Patent Office

Office européen des brevets

(19)

(11) Numéro de publication: **0 064 931**
**B1**

(12) **FASCICULE DE BREVET EUROPEEN**

(45) Date de publication du fascicule du brevet:
27.12.84

(51) Int. Cl.³: **A 61 M 1/03**

(21) Numéro de dépôt: **82420043.0**

(22) Date de dépôt: **30.03.82**

(54) Appareil à membrane pour le traitemant du sang avec supports de membrane décalés.

(30) Priorité: **24.04.81 FR 8108383**

(43) Date de publication de la demande:
**17.11.82 Bulletin 82/46**

(45) Mention de la délivrance du brevet:
**27.12.84 Bulletin 84/52**

(84) Etats contractants désignés:
**BE CH DE GB IT LI NL SE**

(56) Documents cités:
**DE - A - 2 134 752**
**FR - A - 2 326 960**
**FR - A - 2 354 116**
**GB - A - 1 203 582**
**US - A - 3 907 687**

(73) Titulaire: **HOSPAL INDUSTRIE, 7, Avenue Lionel Terray, F-69330 Meyzieu (FR)**

(72) Inventeur: **Benattar, Robert, 115, Boulevard Yves Farges, F-69007 Lyon (FR)**
Inventeur: **Cronenberger, Michel, Chassagny, F-69700 Givors (FR)**
Inventeur: **Lateltin, Paul, La Rivoire Seyssuel, F-38200 Vienne (FR)**
Inventeur: **Martini, Robert, 47, Avenue Esquirol, F-69003 Lyon (FR)**

(74) Mandataire: **Gauckler, Jacques et al, RHONE-POULENC RECHERCHES HOSPAL-BREVETS Centre de Recherches de Saint-Fons B.P. 62, F-69190 Saint-Fons (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un appareil à membrane semi-perméable pour le traitement du sang, d'un type autre qu'à fibres creuses. Elle concerne plus particulièrement un hémodialyseur et/ou un hémofiltre, muni de membranes planes ou roulées en spirales, reposant sur les supports en relief d'éléments de soutien rigides ou semi-rigides.

Dans de tels appareils, le sang circule au contact d'une face de la membrane, et le liquide de dialyse et/ou l'ultrafiltrat que l'on désignera ici, pour simplifier, par le liquide auxiliaire, circule dans l'espace ménagé par les supports en relief, entre la face opposée de la membrane et l'élément de soutien correspondant.

C'est ainsi que le document FR-A Nr. 2326960 décrit un dialyseur de type bobiné comprenant essentiellement une membrane tubulaire aplatie roulée en spirale autour d'un mandrin avec un élément de soutien qui comporte une partie pleine centrale munie sur chaque face respectivement de nervures obliques et de barrettes régulièrement intercalées et de hauteurs différentes qui supportent la membrane, permettant son étirage et lui évitant d'obstruer les canaux d'écoulement du liquide de dialyse.

Dans les appareils connus de ce type, la membrane prend appui simultanément sur la totalité des supports en relief pendant la durée du traitement du sang, ce qui limite assez sensiblement la surface utile de la membrane, donc l'efficacité du traitement.

Les appareils de ce type sont munis de supports en relief alternativement haut et bas, permettant notamment le maintien à l'intérieur de l'appareil d'un volume de sang limité qui reste sensiblement constant, quelle que soit la pression transmembranaire.

Cependant, deux tendances nouvelles rendent non satisfaisantes les structures des appareils connus. C'est, d'une part, la substitution aux membranes habituelles de membranes ayant des caractéristiques de perméabilité très fortement améliorées et, d'autre part, due à un souci permanent de réduction des coûts, la miniaturisation des hémodialyseurs et hémofiltres.

Ainsi, l'épaisseur des membranes tend à diminuer pour combiner une réduction de coût à une perméabilité sensiblement améliorée. Il en résulte un risque accru d'apparition de microperforations pouvant engendrer des fuites si elles sont localement soumises à des tensions trop fortes. D'où la nécessité de multiplier les supports, mais on fait alors obstacle à l'écoulement du sang et du liquide auxiliaire (augmentation excessive des pertes de charge) et l'on réduit de façon très sensible la surface utile aux échanges.

Par ailleurs, la miniaturisation des appareils de traitement de sang conduit à réduire la hauteur de l'appareil, donc l'épaisseur des intercalaires et notamment la hauteur des supports en relief, ce qui crée des difficultés de dégazage, des bulles d'air s'accrochant aux supports et perturbant l'écoulement du liquide de dialyse.

La présente invention a pour objet un appareil de traitement du sang, notamment un hémodialyseur et/ou un hémofiltre de dimensions réduites, susceptible d'être équipé de membranes minces de perméabilité élevée (par exemple supérieure à: 7,5 ml/h×mbar×m²) qui ne présente pas les inconvénients précités.

La présente invention a plus particulièrement pour objet un appareil à membrane semi-perméable pour le traitement du sang, notamment un hémodialyseur et/ou un hémofiltre, dont le rapport de la surface utile de membrane à la surface disponible soit sensiblement augmenté.

La présente invention a également pour objet un appareil de traitement du sang dont la structure permette un soutien plus efficace de membranes minces et relativement fragiles tout en évitant pratiquement tout risque de microperforation, donc de fuite.

Elle a également pour objet un appareil de traitement du sang susceptible de recevoir des membranes facilement déformables sous l'effet de pressions transmembranaires usuelles et de limiter très sensiblement les variations d'épaisseur du film sang et le volume du sang à l'intérieur de l'appareil de manière à permettre, d'une part, des échanges efficaces et, d'autre part, grâce à de faibles pertes de charge du circuit sang et du circuit de liquide auxiliaire, de pouvoir maintenir un débit d'ultrafiltration à des niveaux bas et réglables.

Elle a également pour objet un appareil de traitement du sang, notamment par hémodialyse, permettant un bon dégazage et une bonne circulation du liquide de dialyse malgré une faible hauteur des supports de la membrane. Elle a également pour objet un appareil de traitement du sang qui offre une structure polyvalente qui convienne notamment aussi bien pour l'hémodialyse que pour l'hémofiltration.

D'autres objets de la présente invention apparaîtront au cours de la description qui va suive.

Selon l'invention, on a trouvé que toutes ces exigences contradictoires peuvent être satisfaites si l'on utilise un appareil dont la structure est telle que, lorsque la pression transmembranaire est relativement modérée, la membrane ne repose que sur un nombre limité de supports relativement espacés et, lorsque la pression transmembranaire devient plus forte, la membrane prend appui en outre sur des supports intermédiaires complémentaires.

Il a maintenant été trouvé un appareil de traitement du sang, notamment par hémodialyse et/ou hémofiltration, d'un type autre qu'à fibres creuses, comprenant en combinaisons:

a)   au moins une membrane semi-perméable étirable placée entre les faces en regard d'au moins une paire d'éléments accolés rigides ou semi-rigides de soutien de ladite membrane, lesdites faces étant munies de supports en relief,

b)   des moyens permettant la circulation d'un liquide auxiliaire entre une face de chaque membrane et l'élément de soutien situé en regard de celle-ci,

c)   des moyens permettant la circulation du sang au contact de la face opposée de ladite membrane,

lesdits supports en relief formant sur au moins l'une des faces en regard de chaque paire d'éléments de soutien au moins deux réseaux, régulièrement intercalés et de hauteurs différentes, dont le plus élevé est en contact permanent avec la membrane adjacente.

Cet appareil est caractérisé par le fait que chaque membrane est élastique et pincée entre les supports en regard les plus élevés portés par lesdites faces en regard de chaque paire d'éléments de soutien et est tendue entre les supports les plus élevés de la face de l'élément de soutien située en regard de ladite membrane, de manière à ne pas reposer sur les supports moins élevés pour une pression transmembranaire correspondant à un écoulement normal des liquides et par le fait que les caractéristiques mécaniques de la membrane sont telles que, pour des pressions transmembranaires supérieures à ladite pression correspondant audit écoulement normal, la membrane se déforme élastiquement jusqu'à venir reposer sur les supports les moins élevés.

La présente invention porte donc sur une combinaison de moyens constituée, de façon élémentaire, par la disposition relative d'une membrane par rapport à l'élément de soutien correspondant. Cet élément de soutien comporte des supports de membrane en relief et, selon l'invention, seule une partie des supports est en contact permanent avec la membrane. Les autres reliefs n'exercent — le cas échéant — une fonction de support de la membrane que de façon temporaire, selon l'importance de la presssion transmembranaire. Contrairement aux appareils de l'art antérieur, les reliefs dont sont munis les éléments de soutien de la membrane exercent donc une action décalée dans le temps, fonction de la pression transmembranaire et généralement réversible.

La présente invention sera mieux comprise à l'aide des figures ci-jointes qui représentent schématiquement et sans échelle déterminée divers modes de réalisation.

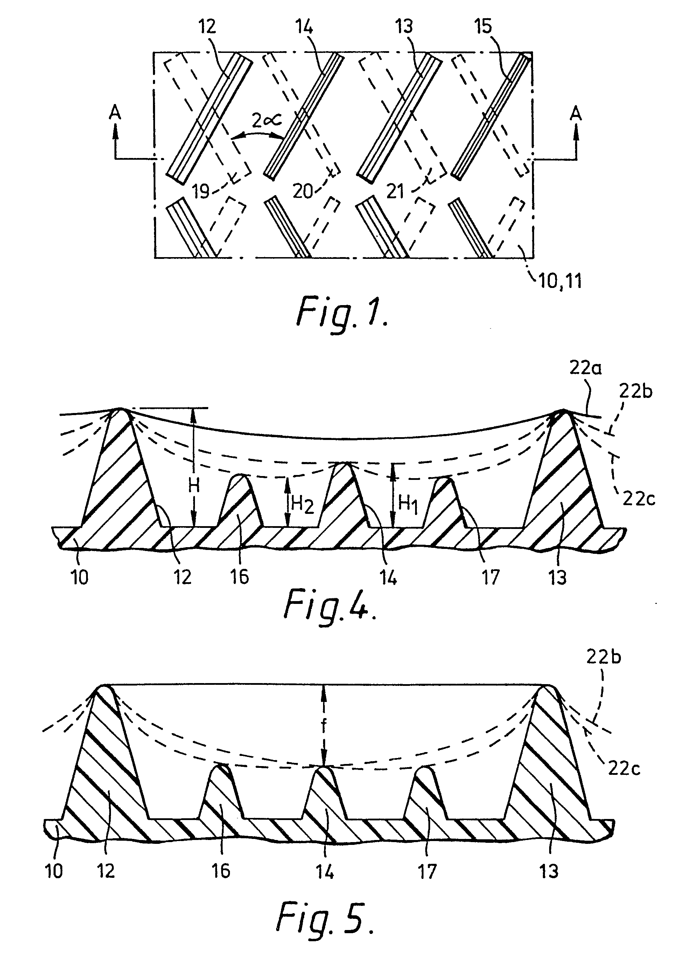

La fig. 1 est une vue partielle de dessus d'un premier mode de réalisation, préférentiel, d'un élément de soutien d'une paire de membranes, muni, comme supports en relief, de séries de nervures parallèles, inclinées, représentées en traits pleins. En pointillés sont représentées les nervures homologues constituant les supports en relief d'un élément de soutien adjacent superposé. La fig. 1 montre ainsi la disposition relative des nervures inclinées se faisant face et enserrant une paire de membranes.

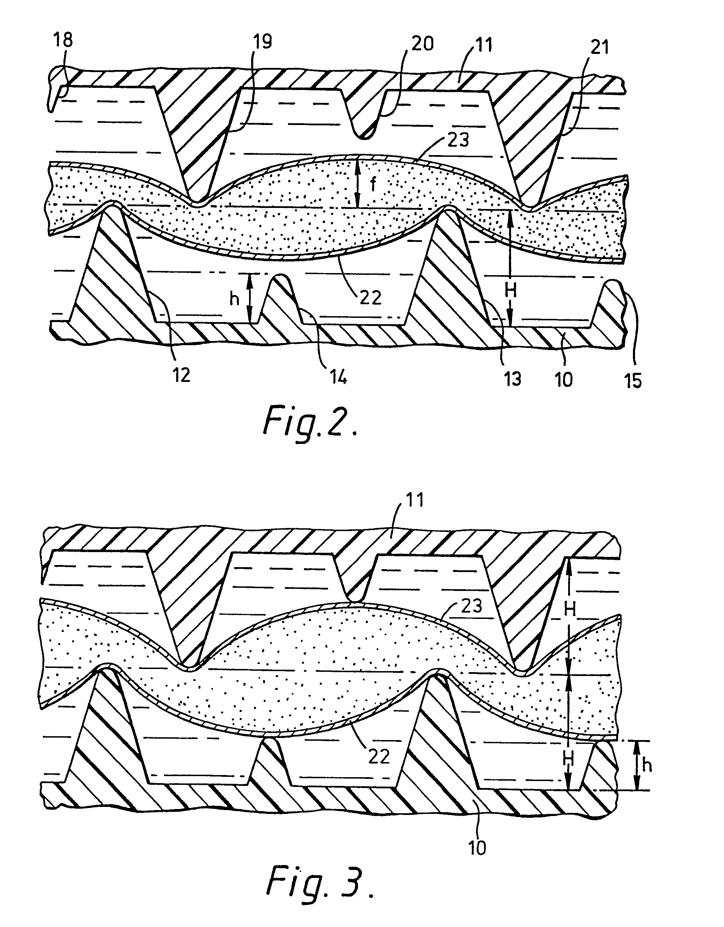

Les fig. 2 et 3 sont les vues en coupe partielle selon AA de la fig. 1 du même jeu de deux éléments de soutien adjacents disposés de part et d'autre d'une paire de membranes. Ces fig. 2 et 3 montrent les dispositions relatives des membranes avec les mêmes éléments de soutien munis de supports en relief selon le premier mode de réalisation.

La fig. 2 montre la membrane ayant pris forme pour un fonctionnement normal de l'appareil: elle n'est pas en contact avec les supports en relief moins élevés tels que 14, 15, 18 et 20.

La fig. 3 montre la membrane ayant subi un allongement dû à une augmentation sensible de pression transmembranaire et venant en contact avec les supports tels que: 14, 15, 18 et 20.

La fig. 4 est la vue partielle en coupe des dispositions relatives d'une membrane avec un second mode de réalisation d'un élément de soutien de cette membrane équipant un appareil selon l'invention. Cet élément de soutien possède trois réseaux de supports en relief ayant chacun des hauteurs différentes.

La fig. 5 est la vue en coupe partielle de dispositions relatives d'une membrane et d'un troisième mode de réalisation d'un élément de soutien de cette membrane équipant l'appareil selon l'invention. Cet élément possède deux réseaux de supports en relief de hauteurs différentes. La membrane est représentée en pointillés dans une position où elle est tangente au relief support 14 et en traits mixtes dans une position où elle est en outre tangente aux reliefs supports 16 et 17, de même hauteur que 14.

Pour simplifier, sur ces figures, les pièces homologues sont désignées par les mêmes numéros.

Les appareils de traitement du sang comportant une membrane semi-perméable possèdent chacun une structure particulière pour soutenir la membrane et permettre la circulation simultanée du sang d'un côté de la membrane et d'un liquide auxiliaire (liquide de dialyse et/ou ultrafiltrat) du côté opposé.

Seuls les appareils dits à fibres creuses ont des membranes autosupportées. La présente invention s'applique donc à tout type d'appareil de traitement du sang autre qu'à fibres creuses. Cependant, elle s'applique de préférence aux appareils à membrane de forme générale plane, pliée ou non en accordéon autour d'éléments intercalaires. Pour plus de commodité, nous décrirons la présente invention en ne nous référant qu'à des éléments de soutien de forme générale plane.

Ces appareils de traitement du sang peuvent être de type monomembranaire, mais ils sont le plus souvent de type bimembranaire, c'est-à-dire que, comme représenté sur les fig. 2 et 3, deux membranes (ou une membrane repliée sur elle-même) sont disposées entre deux éléments adjacents, rigides ou semi-rigides, constitués généralement à partir de matériaux thermoplastiques tels que, par exemple, le polyéthylène.

On désignera ici par élément de soutien tout élément rigide ou semi-rigide tel qu'un intercalaire supportant des membranes sur ses deux faces ou bien un élément de boîtier d'appareil ne supportant de membrane que sur sa face interne. Pour faciliter la compréhension de l'invention, on ne considérera ici qu'une seule face de chacun de ces éléments, ou bien chacune des faces en regard de deux éléments adjacents, ainsi que, en combinaison, la membrane qui y prend appui, étant donné que toute autre caractéristique de l'appareil de traitement du sang considéré ici est de type traditionnel.

Le liquide auxiliaire (liquide de dialyse et/ou ultrafiltrat) circule entre la membrane et l'élément de soutien correspondant, aussi celui-ci est-il muni de supports en relief, c'est-à-dire de proéminences ménageant entre elles des dépressions par où circule le liquide auxiliaire. Ces supports en relief peuvent avoir des formes très diverses en fonction notamment de la nature du traitement du sang et des propriétés mécaniques de la membrane.

En se référant au mode préférentiel représenté fig. 1 à 3, l'élément de soutien 10 porte des rangées de nervures-supports rectilignes, parallèles, discontinues, inclinées alternativement d'un angle aigu $\alpha$ par rapport à son axe longitudinal. Avantageusement l'angle $2\alpha$ est supérieur à 15°. Ces nervures sont de préférence dans le prolongement les unes des autres et au besoin, comme représenté, à condition de les considérer alternativement d'un élément de soutien 10 à l'élément adjacent 11 lui faisant face, elles dessinent alors des zigzags en pseudo-alignement ménageant des conduits parallèles en zigzag pour le liquide auxiliaire.

Ces nervures ont de préférence des profils transversaux triangulaires à sommets arrondis afin de ne neutraliser qu'une très faible surface de la membrane, mais sans la traumatiser. La longueur de ces nervures est avantageusement comprise entre 5 et 50 fois, et de préférence entre 10 et 20 fois, leur plus grande dimension transversale. Ces nervures forment deux réseaux de hauteurs différentes: les nervures telles que 12 et 13 s'élèvent à une hauteur H au-dessus du plan de la face de l'élément de soutien tournée du côté de la membrane. Les nervures telles que 14 et 15 s'élèvent à une hauteur $h < H$ au-dessus de ce plan.

Selon ce premier mode de réalisation, les nervures de hauteur H alternent avec les nervures de hauteur h: les deux réseaux sont donc disposés en alternance, de façon à soutenir la membrane aussi régulièrement que possible, quelles que soient les dispositions et/ou les orientations relatives des nervures d'une même rangée ou d'une rangée à l'autre. Ils sont en fait intercalés l'un par rapport à l'autre aussi régulièrement que possible.

Sur l'élément de soutien adjacent 11, des nervures homologues 19 et 21 de hauteur H et 18 et 20, de hauteur h, se croisent avec celles de l'élément 10. Entre ces deux éléments 10 et 11 sont disposées les membranes 22 et 23. Ces membranes sont pincées par les éléments de soutien 10 et 11 aux points d'intersection des sommets des nervures en regard de hauteur H seulement, telles que 12 et 19, ou 14 et 21. La distance entre les faces en regard des deux éléments de soutien adjacents 10 et 11 est donc, si l'on néglige l'épaisseur de la membrane, égale à 2 H. (Une fonction essentielle des supports en relief les plus élevés est en effet de maintenir un écartement permanent déterminé 2 H entre deux éléments de soutien adjacents.)

Généralement le sang s'écoule entre les membranes 22, 23 et le liquide auxiliaire dans l'espace ménagé entre chaque membrane et la face correspondante de l'élément de soutien 10, 11, disponible autour des supports tels que 12, 13, 14, 15 et/ou 18, 19, 20, 21.

Selon la présente invention, les dispositions relatives des membranes 22, 23 et des supports comme 12, 13, 14, 15 et 18, 19, 20, 21 sont telles que lorsque les membranes ont pris une forme correspondant à un écoulement normal et simultané du sang et du fluide auxiliaire, ces membranes ne sont au contact que d'une partie seulement de ces supports en relief, comme représenté fig. 2. Elles ne sont, en fait, en contact permanent qu'avec les supports constitués par les nervures les plus élevées, de hauteur H, c'est-à-dire les nervures telles que 12, 13, 19 et 21.

Sous l'effet d'une pression transmembranaire sensiblement croissante, le sang étant à une pression toujours supérieure à celle du liquide auxiliaire, les membranes sont soumises à des contraintes qui se traduisent par des allongements (et des flèches f – cf. fig. 5), entre deux appuis consécutifs, sensiblement proportionnels à cette augmentation de pression. Selon l'invention, un second réseau de supports en relief de hauteur $h < H$, constitué par exemple par des nervures telles que 14, 15, 18, 20 vient alors dans un second temps soutenir la membrane et limiter ses déformations, ses contraintes et ainsi les risques de microperforations, donc de fuites (cf. fig. 3). Une fonction essentielle de ce second ensemble de supports en relief de hauteur moins élevée est donc de constituer pour la membrane un réseau de butées-supports complémentaires susceptibles de limiter sa flèche en cas d'allongement.

La fig. 4 montre une variante de réalisation de l'appareil selon l'invention. L'élément de soutien 10 comporte trois réseaux distincts de supports en relief constitués chacun de nervures ayant une même hauteur, H, H1 ou H2, telles que $H > H1 > H2$. Ainsi les nervures 12 et 13 appartiennent à un premier réseau de hauteur H, les nervures telles que 14 appartiennent à un deuxième réseau de hauteur H1 et les nervures 16 et 17 à un troisième réseau de hauteur H2. La hauteur H1 de la nervure médiane 14 est généralement comprise entre H et H2, mais elle peut être égale à la limite, soit à H, comme représenté fig. 2 et 3, soit à H2, comme représenté fig. 5. Avantageusement, chaque nervure de hauteur inférieure à H est disposée sensiblement au milieu de l'intervalle compris entre deux nervures de hauteur relative supérieure afin de soutenir la membrane sensiblement à l'endroit de la flèche maximale.

La membrane 22 prend appui en permanence sur les supports en relief constitués par les nervures telles que 12 et 13 appartenant au réseau de hauteur H. Elle occupe alors une position telle que 22a. On constate que, dans cette position, les points d'appui de la membrane sont espacés et limités aux seules arêtes arrondies des nervures telles que 12 et 13. La surface utile de la membrane est alors supérieure à ce qu'elle serait si elle était en outre supportée par des nervures intermédiaires.

Lorsque la pression transmembranaire augmente, la flèche f de la membrane augmente jusqu'à ce qu'elle vienne en contact de l'arête arrondie de la nervure intermédiaire 14 de hauteur H1 selon le profil 22b. Cette nervure exerce alors une action de soutien complémentaire, décalée dans le temps, limitant la déformation de la membrane et les tensions auxquelles elle est soumise.

En cas d'accroissement supplémentaire de la pression transmembranaire, la membrane peut être encore soutenue, sensiblement au milieu de chaque intervalle libre, par les arêtes arrondies des nervures intermédiaires 16 et 17 de hauteur H2; elle prend alors un profil tel que 22c.

Lorsque la pression transmembranaire décroît, la limite élastique de la membrane n'étant généralement pas atteinte, la flèche de la membrane décroît et la membrane peut reprendre des profils tels que les profils précédents 22b et/ou 22a. Cela permet à l'appareil de fonctionner à tout moment dans les meilleures conditions d'efficacité, réversiblement, et cela permet en outre, en fin d'opération, une meilleure restitution du sang.

Les valeurs de la pression transmembranaire pour lesquelles les membranes entrent en contact avec des supports supplémentaires ne sont pas critiques. Elles peuvent être choisies librement par le technicien selon l'application envisagée, en fonction notamment des caractéristiques physiques et mécaniques de l'élément de soutien et de la membrane. Ainsi ces valeurs peuvent étre notamment soit des valeurs moyennes d'utilisation, soit des valeurs limites à ne pas dépasser sensiblement pour des raisons de sécurité.

On constate ainsi que, selon la présente invention, chaque fois que la pression transmembranaire est modérée, la membrane n'est soutenue que par des supports espacés. Cette disposition présente notamment les avantages suivants:

— le rapport de la surface utile à la surface disponible de la membrane est ainsi plus élevé, d'où une efficacité améliorée;

— une circulation du sang plus aisée, les pertes de charge et la rétention du sang étant réduites; en outre, le niveau d'ultrafiltration minimal est abaissé, le débit d'ultrafiltration restant réglable;

— une circulation du liquide de dialyse facilitée et, notamment, une plus grande facilité de dégazage, même lorsque les reliefs sont miniaturisés.

Lorsque la pression transmembranaire est sensiblement plus élevée, soit momentanément lors d'une séance d'hémodialyse, soit lors d'un traitement par hémofiltration, la membrane peut être progressivement soutenue par l'ensemble des supports en relief, ce qui présente notamment les avantages suivants:

— la membrane étant régulièrement soutenue à intervalles rapprochés, elle ne subit pas d'effort important, ce qui élimine pratiquement tout risque de microperforation, même lorsque la membrane est mince et fragile;

— la déformation de la membrane est contenue dans des limites prédéterminées, ce qui, d'une part, limite le volume de sang contenu dans l'appareil à membranes et ce qui, d'autre part, maintient l'épaisseur du film dans des limites permettant des échanges efficaces;

— des passages suffisants sont préservés pour la circulation du liquide auxiliaire.

On observe en outre qu'une même structure de soutien de membrane selon l'invention peut être utilisée aussi bien en hémodialyse qu'en hémofiltration; ce caractère polyvalent est avantageux, tant sur le plan de l'économie que de l'utilisation.

Un appareil selon l'invention permet donc, non seulement des performances améliorées grâce à la mise en œuvre de membranes minces à haute perméabilité, mais il autorise des constructions miniaturisées plus pratiques et plus économiques, tout en offrant une très grande sécurité d'emploi.

Il peut être utilisé comme hémodialyseur et/ou comme hémofiltre, ou également, le cas échéant, comme oxygénateur de sang.

## Revendications

1. Appareil de traitement du sang, notamment par hémodialyse et/ou hémofiltration d'un type autre qu'à fibres creuses, comprenant en combinaison:
a) au moins une membrane semi-perméable étirable (22) placée entre les faces en regard d'au moins une paire d'éléments (10, 11) accolés rigides ou semi-rigides de soutien de ladite membrane, lesdites faces étant munies de supports en relief (12, 13, 14, 15),
b) des moyens permettant la circulation d'un liquide auxiliaire entre une face de chaque membrane (22) et l'élément de soutien (10) situé en regard de celle-ci,
c) des moyens permettant la circulation du sang au contact de la face opposée de ladite membrane (22),
lesdits supports en relief (12, 13, 14, 15) formant sur au moins l'une des faces en regard de chaque paire d'éléments de soutien (10) au moins deux réseaux, régulièrement intercalés et de hauteurs différentes dont le plus élevé (12, 13) est en contact permanent avec la membrane adjacente, caractérisé par le fait que chaque membrane (22) est élastique et pincée entre les supports en regard les plus élevés (12, 13, 19, 21) portés par lesdites faces en regard de chaque paire d'éléments de soutien (10, 11) et est tendue entre les supports les plus élevés (12, 13) de la face de l'élément de soutien située en regard de ladite membrane, de manière à ne pas reposer sur les supports moins élevés (14, 15) pour une pression transmembranaire correspondant à un écoulement normal des liquides, et par le fait que les caractéristiques mécaniques de la membrane (22) sont telles que, pour des pressions transmembranaires supérieures à ladite pression correspondant audit écoulement normal, la membrane se déforme élastiquement jusqu'à venir reposer sur les supports les moins élevés (14, 15).

2. Appareil selon la revendication 1, caractérisé en ce que lesdits éléments de soutien (10, 11) ont une forme générale plane.

3. Appareil selon l'une des revendications 1 ou 2, caractérisé en ce que lesdits supports en relief (12, 13, 14, 15, 16, 17) ont des profils transversaux triangulaires à sommets arrondis.

4. Appareil selon l'une quelconque des revendications précédentes, caractérisé en ce que lesdits supports en relief sont constitués de nervures rectilignes discontinues (12, 13, 14, 15), inclinées d'un angle aigu α par rapport à un axe longitudinal.

5. Appareil selon la revendication 4, caractérisé en ce que lesdites nervures (12, 13, 14, 15) ont une longueur comprise entre 5 et 50 fois leur plus grande dimension transversale.

6. Appareil selon la revendication 4, caractérisé en ce que lesdites nervures sont dans le prolongement les unes des autres, soit sur un même intercalaire, soit, si l'on considère leurs positions respectives, alternativement sur deux éléments de soutien adjacents (10, 11), se faisant face.

7. Appareil selon la revendication 4, caractérisé en ce que deux éléments de soutien adjacents (10, 11) portent sur leurs faces, en regard des nervures rectilignes discontinues de hauteurs différentes, lesdites nervures en regard les plus élevées (12, 13, 19, 21) se croisant en formant un angle aigu > 15°.

8. Appareil selon l'une quelconque des revendications précédentes, caractérisé en ce que, sur au moins un élément de soutien (10), un support en relief (16, 17) de hauteur H2 est disposé sensiblement à égale distance de deux supports adjacents de hauteurs respectives H (12) et H1 (14) telles que H > H1 > H2, H1 pouvant en outre être égal soit à H, soit à H2.

9. Appareil selon l'une quelconque des revendications précédentes, caractérisé en ce que chaque support en relief de hauteur inférieure (14, 20) est disposé sensiblement au milieu de l'intervalle compris entre deux supports en relief plus élevés (12, 13 et 19, 21).

**Claims**

1. Apparatus for treating blood, in particular by haemodialysis and/or haemofiltration, of a type other than the hollow fibres type, comprising, in combination:
(*a*) at least one stretchable semi-permeable membrane (22) placed between the opposing faces of at least one pair of adjoining, rigid or semi-rigid elements (10, 11) for supporting the said membrane, the said faces being provided with projecting supports (12, 13, 14, 15),

(*b*) means permitting the circulation of an auxiliary liquid between a face of each membrane (22) and the supporting element (10) situated facing the latter,
(*c*) means permitting the circulation of the blood in contact with the opposite face of the said membrane (22),
the said projecting supports (12, 13, 14, 15) forming on at least one of the opposing faces of each pair of supporting elements (10) at least two systems, uniformly spaced and of different heights, the higher one of which (12, 13) is in permanent contact with the adjacent membrane, characterised in that each membrane (22) is elastic and pinched between the higher opposing supports (12, 13, 19, 21) on by the said opposing faces of each pair of supporting elements (10, 11) and is stretched between the higher supports (12, 13) of the same face of the supporting element which face is opposing the said membrane so as not to rest on the supports of lesser height (14, 15) for a trans-membrane pressure corresponding to a normal flow of the liquids, and in that the mechanical characteristics of the membrane (22) are such that, for trans-membrane pressures greater than the said pressure corresponding to the said normal flow, the membrane distorts elastically until it comes to rest on the supports of lesser height (14, 15).

2. Apparatus according to Claim 1, characterised in that the said supporting elements (10, 11) have a plane general shape.

3. Apparatus according to one of Claims 1 or 2, characterised in that the said projecting supports (12, 13, 14, 15, 16, 17) have triangular cross-sections with rounded tops.

4. Apparatus according to any one of the preceding claims, characterised in that the said projecting supports consists of discontinuous rectilinear ribs (12, 13, 14, 15), inclined at an acute angle α relative to a lengthwise axis.

5. Apparatus according to Claim 4, characterised in that the said ribs (12, 13, 14, 15) have a length which is between 5 and 50 times their largest transverse dimension.

6. Apparatus according to Claim 4, characterised in that the said ribs lie in the extension of one another, either on the one and the same spacer, or, if their respective positions are considered, alternately on two adjacent supporting elements (10, 11) facing one another.

7. Apparatus according to Claim 4, characterised in that the two adjoining supporting elements (10, 11) carry, on their opposing faces, discontinuous rectilinear ribs of different heights, the highest of the said opposing ribs (12, 13, 19, 21) intersecting to form an acute angle > 15°.

8. Apparatus according to any one of the preceding claims, characterised in that, on at least one supporting element (10), a projecting support (16, 17) of height H2 is arranged at an essentially equal distance from two adjacent supports of respective heights H (12) and H1 (14), such that H > H1 > H2, it also being possible for H1 to be equal either to H or to H2.

9. Apparatus according to any one of the preceding claims, characterised in that each projecting support of lesser height (14, 20) is arranged essentially in the middle of the gap between two higher projecting supports (12, 13 and 19, 21).

## Patentansprüche

1. Vorrichtung zum Behandeln von Blut, insbesondere durch Hämodialyse und/oder Hämofiltration in einer von Hohlfasern abweichenden Bauart, in Kombination enthaltend:
a)  wenigstens eine dehnbare semipermeable Membran (22) zwischen den einander gegenüberliegenden Flächen von wenigstens einem Paar von zusammengebauten starren oder halbstarren Stützelementen (10, 11) der Membran, wobei die Flächen mit erhabenen Stützen (12, 13, 14, 15) versehen sind,
b)  Mittel für die Zirkulation einer Hilfsflüssigkeit zwischen einer Fläche jeder Membran (22) und dem dieser gegenüberliegenden Stützelement (10),
c)  Mittel für die Zirkulation des Blutes in Berührung mit der gegenüberliegenden Fläche der Membran (22),
wobei die erhabenen Stützen (12, 13, 14, 15) auf wenigstens einer der einander gegenüberliegenden Flächen jedes Paares von Stützelementen (10) wenigstens zwei Netzwerke bilden, die regelmässig ineinander geschachtelt sind und unterschiedliche Höhen aufweisen und deren höchstes (12, 13) in ständiger Berührung mit der benachbarten Membran steht, dadurch gekennzeichnet, dass jede Membran (22) elastisch ist, zwischen den einander gegenüberliegenden höchsten Stützen (12, 13, 19, 21) auf den einander gegenüberliegenden Flächen jedes Paares von Stützelementen (10, 11) eingeklemmt ist und zwischen den höchsten Stützen (12, 13) derselben Fläche des der Membran gegenüberliegenden Stützelementes derart gespannt ist, dass sie bei einem einer normalen Strömung der Flüssigkeiten entsprechenden Transmembrandruck nicht auf den weniger hohen Stützen (14, 15) ruht, und dass die mechanischen Eigenschaften der Membran (22) so beschaffen sind, dass bei Transmembrandrücken, die über dem der normalen Strömung entsprechenden Druck liegen, sich die Membran elastisch verformt, bis sie auf den weniger hohen Stützen (14, 15) ruht.

2. Vorrichtung nach Anspruch 1, dadurch gekennzeichnet, dass die Stützelemente (10, 11) eine allgemeine ebene Form haben.

3. Vorrichtung nach einem der Ansprüche 1 oder 2, dadurch gekennzeichnet, dass die erhabenen Stützen (12, 13, 14, 15, 16, 17) dreieckige Querprofile mit abgerundeten Spitzen haben.

4. Vorrichtung nach einem der vorhergehenden Ansprüche, dadurch gekennzeichnet, dass die erhabenen Stützen aus unterbrochenen geraden Rippen (12, 13, 14, 15) bestehen, die gegenüber einer Längsachse um einen spitzen Winkel $\alpha$ geneigt sind.

5. Vorrichtung nach Anspruch 4, dadurch gekennzeichnet, dass die Rippen (12, 13, 14, 15) eine Länge vom 5- bis 50fachen ihrer grössten Querabmessung haben.

6. Vorrichtung nach Anspruch 4, dadurch gekennzeichnet, dass sich die Rippen in ihrer gegenseitigen Verlängerung befinden, entweder auf ein und derselben Zwischenlage oder, bei Betrachtung ihrer jeweiligen Positionen, abwechselnd auf zwei benachbarten, einander zugewandten Stützelementen (10, 11).

7. Vorrichtung nach Anspruch 4, dadurch gekennzeichnet, dass zwei benachbarte Stützelemente (10, 11) auf ihren einander gegenüberliegenden Flächen unterbrochene gerade Rippen mit unterschiedlichen Höhen tragen, wobei sich die einander gegenüberliegenden höchsten Rippen (12, 13, 19, 21) unter Bildung eines spitzen Winkels von > 15° kreuzen.

8. Vorrichtung nach einem der vorhergehenden Ansprüche, dadurch gekennzeichnet, dass auf wenigstens einem Stützelemente (10) eine erhabene Stütze (16, 17) mit einer Höhe H2 sich in im wesentlichen gleichem Abstand von zwei benachbarten Stützen mit den jeweiligen Höhen H (12) und H1 (14) derart befinden, dass H > H1 > H2, wobei H1 gleich H oder gleich H2 sein kann.

9. Vorrichtung nach einem der vorhergehenden Ansprüche, dadurch gekennzeichnet, dass jede erhabene Stütze (14, 20) von geringerer Höhe sich im wesentlichen in der Mitte des Abstandes zwischen zwei höheren erhabenen Stützen (12, 13) und (19, 21) befindet.

Fig. 1.

Fig. 4.

Fig. 5.

Fig.2.

Fig. 3.